# EUROPEAN PATENT SPECIFICATION

(11) **EP 3 380 881 B1**
(45) Date of publication and mention of the grant of the patent: **25.08.2021**
(21) Application number: 16805520.0
(22) Date of filing: 22.11.2016
(51) Int. Cl.: G02B 6/44, H01B 17/32

(54) **INSULATOR AND METHOD OF MANUFACTURING THE SAME**
ISOLATOR UND VERFAHREN ZUR HERSTELLUNG DAVON
ISOLATEUR ET PROCÉDÉ POUR LE FABRIQUER

(30) Priority: 24.11.2015 CN 201510823311
(43) Date of publication of application: 03.10.2018
(73) Proprietor: Tyco Electronics (Shanghai) Co. Ltd., Shanghai 200131 (CN)
(72) Inventor: XU, Liangliang, Shanghai (CN); YANG, Lizhang, Shanghai (CN); YANG, Haowei, Shanghai (CN); ZHANG, Rong, Shanghai (CN)
(74) Representative: Grünecker Patent- und Rechtsanwälte PartG mbB
(86) International application number: PCT/IB2016/057038
(87) International publication number: WO 2017/089956

(56) References cited:
- EP-A1- 0 704 735
- JP-A- H06 325 648
- US-A- 4 802 731
- US-A1- 2006 153 509
- US-B1- 6 203 647

## Description

### CROSS-REFERENCE TO RELATED APPLICATION

This application claims the benefit of Chinese Patent Application No. CN201510823311.2 filed on November 24, 2015 in the State Intellectual Property Office of China.

### BACKGROUND OF THE INVENTION

### Field of the Invention

The present invention relates to an insulator and a method of manufacturing the insulator.

### Description of the Related Art

In order to electrically isolate a high voltage electrical equipment from a low voltage electrical equipment, in the prior art, usually an insulator is provided between the high voltage electrical equipment and the low voltage electrical equipment. Both ends of the insulator are mounted on housings of the high voltage electrical equipment and the low voltage electrical equipment, respectively. In this way, the high voltage electrical equipment and the low voltage electrical equipment are electrically isolated from each other by the insulator. In addition, the insulator may be used to support the high voltage electrical equipment or the low voltage electrical equipment.

In the prior art, sometimes, there is a need to transmit optical signals between the high voltage electrical equipment and the low voltage electrical equipment. At this time, it is necessary to pave an optical fiber/cable between the high voltage electrical equipment and the low voltage electrical equipment. In the prior art, generally, a mounting groove is formed in an outer wall of an insulation tube of the insulator, and the optical fiber/cable is installed in the fiber mounting groove, then an insulation umbrella skirt is molded on the outer wall of the insulation tube by an injection mould.

However, in the above existing solution to form the insulator with the optical fiber/cable, (1) the optical fiber/cable may be easily damaged due to high temperature and high pressure produced during molding the insulation umbrella skirt on the outer wall of the insulation tube; (2) since the optical fiber/cable is tightly wrapped between the insulation umbrella skirt and the insulation tube and bonded to insulation umbrella skirt and the insulation tube, it is impossible to replace the optical fiber/cable, resulting in the optical signal transmission function cannot be repaired if the optical fiber/cable is damaged; and (3) since the fiber mounting groove is formed in the outer wall of the insulation tube, the mechanical strength of the insulation tube or the insulator is reduced.

Prior art document US 6,203,647 B1 discloses a method for producing a wound insulating pipe by winding first layers of material and positioning and securing a moulded body to a resulting surface, wherein the moulded body comprises an empty conduit. Finally, additional layers are wound around the structure.

Document EP 0 704 735 A1 discloses an electrical insulator comprising a support member with two circular grooves and a helical groove formed in an outer wall of the support member. In said grooves, an optical wave guide may be received.

US 2006/153509 A1 discloses a high-voltage component with an optical fiber comprising an insulation tube received in an insulation part and a fiber provided outside or inside the insulation tube. The fiber may be arranged in a spiral shape around a voltage sensor, and between the fiber and the insulation tube, an insulation filler is provided.

US 4 802 731 A discloses an optical waveguide arrangement for a high-voltage insulator that comprises an insulator tube, around which optical waveguides provided within an optical waveguide cable, are spirally wound around the outside of the insulator tube. Subsequently, these waveguides are embedded into a silicon layer cast thereon.

JP H06 325 648 A discloses an insulator wire with built-in optical fiber, wherein the optical fiber is helically embedded in a wall part of the fiber reinforced resin-made insulation tube.

### SUMMARY OF THE INVENTION

The present invention has been made to overcome or alleviate at least one aspect of the above mentioned disadvantages.

According to an object of the present invention, there is provided an insulator, in which an optical fiber/cable is easily replaced without damaging the optical fiber/cable.

According to an aspect of the present invention, there is provided an insulator, comprising: an insulation tube; an insulation umbrella skirt formed on an outer wall of the insulation tube; at least one fiber receiving tube provided inside the insulation tube; and at least one optical fiber/cable received in the at least one fiber receiving tube, respectively, wherein the at least one fiber receiving tube is held to an inner wall of the insulation tube.

According to another exemplary embodiment of the present invention, a holding member adapted to hold the fiber receiving tube on the inner wall of the insulation tube is provided on the inner wall of the insulation tube.

According to another exemplary embodiment of the present invention, the holding member comprises a hook-shaped member or an elastic clamping member connected to the inner wall of the insulation tube.

According to another exemplary embodiment of the present invention, the fiber receiving tube is directly adhered to the inner wall of the insulation tube.

According to another exemplary embodiment of the present invention, the fiber receiving tube is held on the insulation tube along a spiral path or a linear path.

According to another exemplary embodiment of the present invention, the insulator may further comprise: a first flange mounted on one end of the insulation tube and adapted to connect an electrical equipment or element; a second flange mounted on the other end of the insulation tube and adapted to connect the other electrical equipment or element; a first sealing cover mounted on the one end of the insulation tube and adapted to seal an port at the one end of the insulation tube; and a second sealing cover mounted on the other end of the insulation tube and adapted to seal the other port at the other end of the insulation tube. The one end of the fiber receiving tube passes through and is fixed to the first sealing cover, and the other end of the fiber receiving tube passes through and is fixed to the second sealing cover. The insulation tube is filled with insulating gas or insulating liquid therein.

According to another aspect of the present invention, there is provided a method of manufacturing an insulator, comprising steps of: providing an insulation tube; forming an insulation umbrella skirt on an outer wall of the insulation tube; providing at least one fiber receiving tube inside the insulation tube, wherein the at least on fiber receiving tube is held to an inner wall of the insulation tube; and blowing at least one optical fiber/cable into the at least one fiber receiving tube by an air blowing equipment, respectively.

According to another aspect of the present invention, there is provided a method of manufacturing an insulator, comprising steps of: providing an insulation tube; providing at least one fiber receiving tube inside the insulation tube, wherein the at least one fiber receiving tube is held to an inner wall of the insulation tube; forming an insulation umbrella skirt on the outer wall of the insulation tube; and blowing at least one optical fiber/cable into the at least one fiber receiving tube by an air blowing equipment, respectively.

According to another aspect of an example, there is provided a method of manufacturing an insulator, comprising steps of: providing an insulation tube; forming at least one receiving groove in an outer wall of the insulation tube; placing at least one fiber receiving tube in the at least one receiving groove of the insulation tube, respectively; forming an insulation umbrella skirt on the outer wall of the insulation tube; and blowing at least one optical fiber/cable into the at least one fiber receiving tube by an air blowing equipment, respectively.

According to an exemplary embodiment of the present invention, the at least one fiber receiving tube is held on the inner wall of the insulation tube along a spiral path or a linear path.

In the above various exemplary embodiments of the present invention, since the fiber receiving tube for receiving the optical fiber/cable is provided in the insulator, the optical fiber/cable may be easily introduced into or taken out of the fiber receiving tube, facilitating the replacement of the optical fiber/cable without damaging the optical fiber/cable.

In addition, in some exemplary embodiments of the present invention, the optical fiber/cable may be introduced into the fiber receiving tube after the insulation umbrella skirt is molded on the insulation tube. In this way, the optical fiber/cable is not disadvantageously affected by high temperature and pressure produced during molding the insulation umbrella skirt, ensuring the quality of the optical fiber/cable.

### BRIEF DESCRIPTION OF THE DRAWINGS

The above and other features of the present invention will become more apparent by describing in detail exemplary embodiments thereof with reference to the accompanying drawings, in which:
Fig.1 shows a longitudinal cross section view of an insulator according to an embodiment of the present invention, in which an optical fiber/cable is not inserted into a fiber receiving tube;
Fig.2 shows a longitudinal cross section view of the insulator according to the embodiment of the present invention, in which an optical fiber/cable is inserted into a fiber receiving tube;
Fig.3 shows a longitudinal cross section view of an insulator according to an example not belonging to the invention as claimed, in which an optical fiber/cable is not inserted into a fiber receiving tube; and
Fig.4 shows a longitudinal cross section view of an insulator according to the example not belonging to the invention as claimed, in which an optical fiber/cable is inserted into a fiber receiving tube.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided an insulator, comprising: an insulation tube; an insulation umbrella skirt formed on an outer wall of the insulation tube; at least one fiber receiving tube provided inside the insulation tube or between the insulation tube and the insulation umbrella skirt; and at least one optical fiber/cable received in the at least one fiber receiving tube, respectively.

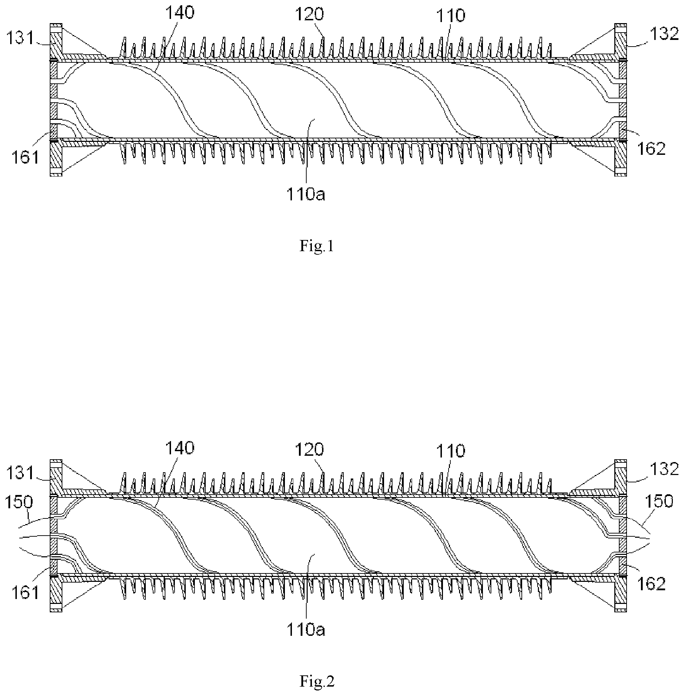

Figs.1 and 2 show an insulator according to an exemplary embodiment of the present invention. Fig.1 shows a longitudinal cross section view of an insulator according to the embodiment of the present invention, in which an optical fiber/cable 150 is not inserted into a fiber receiving tube 140; Fig.2 shows a longitudinal cross section view of the insulator according to the embodiment of the present invention, in which an optical fiber/cable 150 is inserted into a fiber receiving tube 140.

In an embodiment, one end of the insulator may be mounted on a high voltage electrical equipment (not shown), the other end of the insulator may be mounted on a low voltage electrical equipment (not shown). In this way, the high voltage electrical equipment and the low voltage electrical equipment may be electrically isolated from each other by the insulator.

As shown in Figs.1 and 2, in an embodiment, the insulator mainly comprises an insulation tube 110, an insulation umbrella skirt 120, at least one fiber receiving tube 140 and at least one optical fiber/cable 150.

As shown in Figs.1 and 2, the insulation umbrella skirt 120 is formed on an outer wall of the insulation tube 110, for example, the insulation umbrella skirt 120 may be molded on the outer wall of the insulation tube 110 by an injection mould. The fiber receiving tube 140 is provided in the insulation tube 110 and passes through the insulation tube 110. The optical fiber/cable 150 is received in the fiber receiving tube 140 and passes through the fiber receiving tube 140. One end of the optical fiber/cable 150 is coupled with an optical fiber/cable from an electrical equipment (for example, the high voltage electrical equipment), for example, by a fiber optic connector or by fusing, the other end of the optical fiber/cable 150 is coupled with an optical fiber/cable from another electrical equipment (for example, the low voltage electrical equipment), for example, by a fiber optic connector or by fusing. In this way, optical signals may be transmitted between the high voltage electrical equipment and the low voltage electrical equipment.

In an embodiment, as shown in Figs.1 and 2, the optical fiber/cable 150 is introduced into the fiber receiving tube 140 after the insulation umbrella skirt 120 is molded on the outer wall of the insulation tube 110. In this way, the optical fiber/cable 150 is not disadvantageously affected by high temperature and pressure produced during molding the insulation umbrella skirt 120, ensuring the quality of the optical fiber/cable 150.

In an embodiment, the optical fiber/cable 150 may be blown through the fiber receiving tube 140 by an air blowing equipment (not shown). For example, the air blowing equipment may comprise an air compressor.

As shown in Figs. 1 and 2, in an embodiment, a holding member (not shown) adapted to hold the fiber receiving tube 140 on the inner wall 110a of the insulation tube 110 is provided on the inner wall 110a of the insulation tube 110. In an embodiment, the holding member may comprise a hook-shaped member or an elastic clamping member connected to the inner wall 110a of the insulation tube 110.

In another embodiment, as shown in Figs.1 and 2, the fiber receiving tube 140 may be directly adhered to the inner wall 110a of the insulation tube 110, for example, by an adhesive.

As shown in Figs. 1 and 2, in an embodiment, the fiber receiving tube 140 is held on the insulation tube 110 along a spiral path. But the present invention is not limited to this, for example, in another embodiment, the fiber receiving tube may be held on the insulation tube along a linear path.

As shown in Figs.1 and 2, in an embodiment, the insulator may further comprise a first flange 131 and a second flange 132. The first flange 131 is mounted on one end of the insulation tube 110 and adapted to connect the electrical equipment (for example, the high voltage electrical equipment). The second flange 132 is mounted on the other end of the insulation tube 110 and adapted to connect the other electrical equipment (for example, the low voltage electrical equipment).

As shown in Figs.1 and 2, in an embodiment, the insulator may further comprise a first sealing cover 161 and a second sealing cover 162. The first sealing cover 161 is mounted on the one end of the insulation tube 110 and adapted to seal a port at the one end of the insulation tube 110. The second sealing cover 162 is mounted on the other end of the insulation tube 110 and adapted to seal the other port at the other end of the insulation tube 110.

As shown in Figs. 1 and 2, in an embodiment, the one end of the fiber receiving tube 140 passes through and is fixed to the first sealing cover 161, the other end of the fiber receiving tube 140 passes through and is fixed to the second sealing cover 162.

As shown in Figs.1 and 2, in an embodiment, the insulation tube is filled with insulation media therein. For example, the insulation tube is filled with insulating gas or insulating liquid therein.

In another exemplary embodiment of the present invention, there is also provided a method of manufacturing an insulator. As shown in Figs.1 and 2, the method mainly comprises steps of:
providing an insulation tube 110;
forming an insulation umbrella skirt 120 on an outer wall of the insulation tube 110;
providing at least one fiber receiving tube 140 in the insulation tube 110; and
blowing at least one optical fiber/cable 150 into the at least one fiber receiving tube 140 by an air blowing equipment, respectively.

In another exemplary embodiment of the present invention, there is also provided a method of manufacturing an insulator. As shown in Figs.1 and 2, the method mainly comprises steps of:
providing an insulation tube 110;
providing at least one fiber receiving tube 140 in the insulation tube 110;
forming an insulation umbrella skirt 120 on the outer wall of the insulation tube 110; and
blowing at least one optical fiber/cable 150 into the at least one fiber receiving tube 140 by an air blowing equipment.

In the above method, the at least one fiber receiving tube 140 may be held on the insulation tube 110 along a spiral path or a linear path.

In another exemplary embodiment of the present invention, there is also provided an insulator mainly comprising: an insulation tube 110; an insulation umbrella skirt 120 formed on an outer wall of the insulation tube 110; and at least one fiber receiving tube 140 provided inside the insulation tube 110 and passing through the insulation tube 110. The at least one fiber receiving tube 140 is adapted to receive at least one optical fiber/cable 150 therein, respectively.

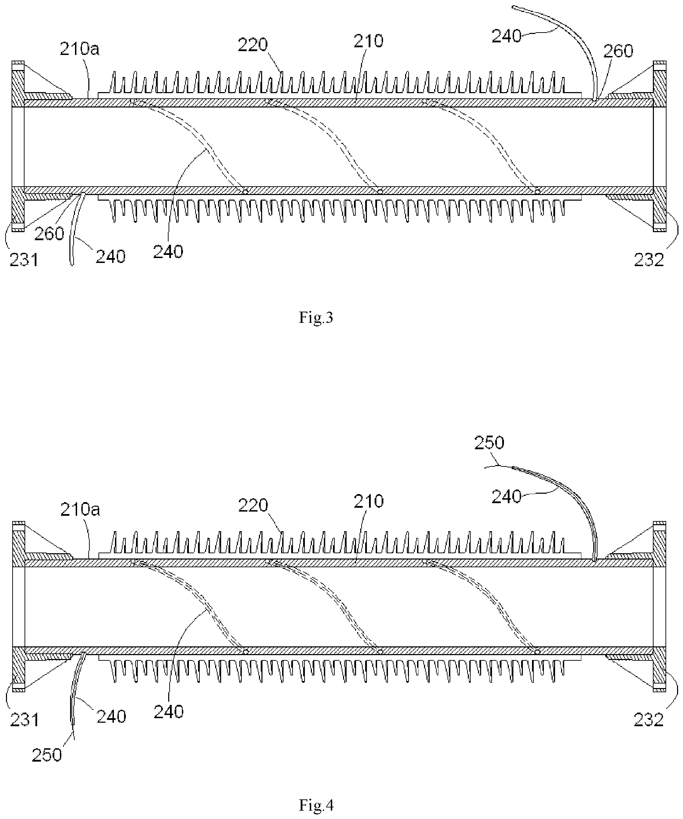

Figs.3 and 4 show an insulator according to an example not belonging to the invention as claimed. Fig.3 shows a longitudinal cross section view of the insulator according to the example not belonging to the invention as claimed, in which an optical fiber/cable 250 is not inserted into a fiber receiving tube 240; and Fig.4 shows a longitudinal cross section view of the insulator according to the example not belonging to the invention as claimed, in which an optical fiber/cable 250 is inserted into a fiber receiving tube 240.

In this example, one end of the insulator may be mounted on a high voltage electrical equipment (not shown), the other end of the insulator may be mounted on a low voltage electrical equipment (not shown). In this way, the high voltage electrical equipment and the low voltage electrical equipment may be electrically isolated from each other by the insulator.

As shown in Figs.3 and 4, in an example, the insulator mainly comprises an insulation tube 210, an insulation umbrella skirt 220, at least one fiber receiving tube 240 and at least one optical fiber/cable 250.

As shown in Figs.3 and 4, the insulation umbrella skirt 220 is formed on an outer wall of the insulation tube 210, for example, the insulation umbrella skirt 220 may be molded on the outer wall of the insulation tube 210 by an injection mould.

As shown in Figs.3 and 4, in this example, the fiber receiving tube 240 is provided between the insulation tube 210 and the insulation umbrella skirt 220. The at least one fiber receiving tube 240 is held on the outer wall 210a of the insulation tube 210.

As shown in Figs.3 and 4, in this example, the optical fiber/cable 250 is received in the fiber receiving tube 240 and passes through the fiber receiving tube 240. One end of the optical fiber/cable 250 is coupled with an optical fiber/cable from an electrical equipment (for example, the high voltage electrical equipment), for example, by a fiber optic connector or by fusing; the other end of the optical fiber/cable 250 is coupled with an optical fiber/cable from another electrical equipment (for example, the low voltage electrical equipment), for example, by a fiber optic connector or by fusing. In this way, optical signals may be transmitted between the high voltage electrical equipment and the low voltage electrical equipment.

In this example, as shown in Figs.3 and 4, the optical fiber/cable 250 is introduced into the fiber receiving tube 240 after the insulation umbrella skirt 220 is molded on the outer wall of the insulation tube 210. In this way, the optical fiber/cable 250 is not disadvantageously affected by high temperature and pressure produced during molding the insulation umbrella skirt 220, ensuring the quality of the optical fiber/cable 250.

In this example, the optical fiber/cable 250 may be blown through the fiber receiving tube 240 by an air blowing equipment (not shown). For example, the air blowing equipment may comprise an air compressor.

As shown in Figs.3 and 4, in an example, at least one receiving groove 260 is formed in the outer wall 210a of the insulation tube 210. The at least one fiber receiving tube 240 is received and held in the at least one receiving groove 260, respectively.

As shown in Figs.3 and 4, in an example, the receiving groove 260 formed in the outer wall 210a of the insulation tube 210 may run along a spiral path, so that the fiber receiving tube 240 held in the receiving groove 260 may run along the spiral path.

As shown in Figs.3 and 4, in an example, the insulator may further comprise a first flange 231 and a second flange 232. The first flange 231 is mounted on one end of the insulation tube 210 and adapted to connect the electrical equipment (for example, the high voltage electrical equipment). The second flange 232 is mounted on the other end of the insulation tube 210 and adapted to connect the other electrical equipment (for example, the low voltage electrical equipment).

As shown in Figs.3 and 4, in an example, the insulation tube 210 may be filled with insulation media therein. For example, the insulation tube 210 may be filled with insulating gas or insulating liquid therein.

It should be appreciated for those skilled in this art that the embodiments as shown in figures 1 and 2 are intended to be illustrated, and not restrictive, within the limits of the scope of the invention as defined by the appended claims. For example, many modifications may be made to the above embodiments by those skilled in this art, and various features described in different embodiments may be freely combined with each, within the limits of the scope of the invention as defined by the appended claims, without conflicting in configuration or principle.

Although several exemplary embodiments have been shown and described, it would be appreciated by those skilled in the art that various changes or modifications may be made in these embodiments without departing from the principles of the disclosure, the scope of which is defined in the claims and their equivalents.

## Claims

1. An insulator, comprising:
an insulation tube (110);
an insulation umbrella skirt (120) formed on an outer wall of the insulation tube (110);
at least one fiber receiving tube (140) provided inside the insulation tube (110); and
at least one optical fiber/cable (150) received in the at least one fiber receiving tube (140), **characterized in that** the at least one fiber receiving tube (140) is held to an inner wall of the insulation tube (110).

2. The insulator according to claim 1,
wherein a holding member, adapted to hold the fiber receiving tube on the inner wall of the insulation tube, is provided on the inner wall of the insulation tube.

3. The insulator according to claim 2,
wherein the holding member comprises a hook-shaped member or an elastic clamping member connected to the inner wall of the insulation tube.

4. The insulator according to claim 1,
wherein the fiber receiving tube is directly adhered to the inner wall of the insulation tube.

5. The insulator according to claim 1,
wherein the fiber receiving tube is held on the insulation tube along a spiral path or a linear path.

6. The insulator according to claim 1, further comprising:
a first flange mounted on one end of the insulation tube and adapted to connect an electrical equipment;
a second flange mounted on the other end of the insulation tube and adapted to connect the other electrical equipment;
a first sealing cover mounted on the one end of the insulation tube and adapted to seal an port at the one end of the insulation tube; and
a second sealing cover mounted on the other end of the insulation tube and adapted to seal the other port at the other end of the insulation tube,
wherein the one end of the fiber receiving tube passes through and is fixed to the first sealing cover, and the other end of the fiber receiving tube passes through and is fixed to the second sealing cover, and
wherein the insulation tube is filled with insulating gas or insulating liquid therein.

7. A method of manufacturing an insulator, comprising steps of:
providing an insulation tube;
forming an insulation umbrella skirt on an outer wall of the insulation tube;
providing at least one fiber receiving tube inside the insulation tube, wherein the at least one fiber receiving tube is held to an inner wall of the insulation tube; and
blowing at least one optical fiber/cable into the at least one fiber receiving tube by an air blowing equipment, respectively.

8. The method according to claim 7, wherein the at least one fiber receiving tube is held on the inner wall of the insulation tube along a spiral path or a linear path.

## Patentansprüche

1. Isolator, der umfasst:
eine Isolier-Röhre (110);
eine Isolierschirm-Schürze (120), die an einer Außenwand der Isolierröhre (110) ausgebildet ist;
wenigstens eine Faseraufnahme-Röhre (140), die im Inneren der Isolier-Röhre (110) vorhanden ist; und
wenigstens ein/e optische/s Faser/Kabel (150), die/das in der wenigstens einen Faseraufnahme-Röhre (140) aufgenommen ist, **dadurch gekennzeichnet, dass** die wenigstens eine Faseraufnahme-Röhre (140) an einer Innenwand der Isolier-Röhre (110) gehalten wird.

2. Isolator nach Anspruch 1,
wobei ein Halteelement, das zum Halten der Faseraufnahme-Röhre an der Innenwand der Isolier-Röhre eingerichtet ist, an der Innenwand der Isolier-Röhre vorhanden ist.

3. Isolator nach Anspruch 2,
wobei das Halteelement ein hakenförmiges Element oder ein elastisches Klemmelement umfasst, das mit der Innenwand der Isolier-Röhre verbunden ist.

4. Isolator nach Anspruch 1,
wobei die Faseraufnahme-Röhre direkt an die Innenwand des Isolierrohrs angeklebt ist.

5. Isolator nach Anspruch 1,
wobei die Faseraufnahme-Röhre entlang eines spiralförmigen Weges oder eines geradlinigen Weges an der Isolier-Röhre gehalten wird.

6. Isolator nach Anspruch 1, der des Weiteren umfasst:
einen ersten Flansch, der an einem Ende der Isolier-Röhre angebracht und zum Anschließen einer elektrischen Einrichtung eingerichtet ist;
einen zweiten Flansch, der an dem anderen Ende der Isolier-Röhre angebracht und zum Anschließen der anderen elektrischen Einrichtung eingerichtet ist;
eine erste Dichtungsabdeckung, die an dem einen Ende der Isolier-Röhre angebracht und zum Abdichten einer Öffnung an dem einen Ende der Isolier-Röhre eingerichtet ist; sowie
eine zweite Dichtungsabdeckung, die an dem anderen Ende der Isolier-Röhre angebracht und zum Abdichten der anderen Öffnung an dem anderen Ende der Isolier-Röhre eingerichtet ist,
wobei das eine Ende der Faseraufnahme-Röhre durch die erste Dichtungsabdeckung hindurch verläuft und daran befestigt ist, und das andere Ende der Faseraufnahme-Röhre durch die zweite Dichtungsabdeckung hindurch verläuft und daran befestigt ist, und
wobei die Isolier-Röhre mit isolierendem Gas oder isolierender Flüssigkeit gefüllt ist.

7. Verfahren zum Herstellen eines Isolators, das die folgenden Schritte umfasst:
Bereitstellen einer Isolier-Röhre;
Ausbilden einer Isolierschirm-Schürze (120) an einer Außenwand der Isolier-Röhre (110);
Bereitstellen wenigstens einer Faseraufnahme-Röhre im Inneren der Isolier-Röhre, wobei die wenigstens eine Faseraufnahme-Röhre an einer Innenwand der Isolier-Röhre gehalten wird; sowie
Einblasen wenigstens einer/eines optischen Faser/Kabels in die wenigstens eine Faseraufnahme-Röhre mittels einer Luftblaseinrichtung.

8. Verfahren nach Anspruch 7, wobei die wenigstens eine Faseraufnahme-Röhre entlang eines spiralförmigen Weges oder eines geradlinigen Weges an der Innenwand der Isolier-Röhre gehalten wird.

## Revendications

1. Isolateur, comprenant :
un tube isolant (110) ;
une jupe de parapluie isolant (120) constituée d'une paroi extérieure du tube isolant (110) ;
au moins un tube de réception de fibre (140) disposé à l'intérieur du tube isolant (110) ; et
au moins un câble/une fibre optique (150) reçu(e) dans l'au moins un tube de réception de fibre (140), caractérisé(e) en ce que l'au moins un tube de réception de fibre (140) est maintenu sur une paroi intérieure du tube isolant (110).

2. L'isolateur selon la revendication 1,
dans lequel un élément de maintien, adapté pour maintenir le tube de réception de fibre sur une paroi intérieure du tube isolant, est disposé sur la paroi intérieure du tube isolant.

3. L'isolateur selon la revendication 2,
dans lequel l'élément de maintien comprend un élément en forme de crochet ou un élément de serrage élastique connecté à la paroi intérieure du tube isolant.

4. L'isolateur selon la revendication 1,
dans lequel le tube de réception de fibre adhère directement à la paroi intérieure du tube isolant.

5. L'isolateur selon la revendication 1,
dans lequel le tube de réception de fibre est maintenu sur le tube isolant le long d'un trajet en spirale ou d'un trajet linéaire.

6. L'isolateur selon la revendication 1, comprenant en outre :
une première bride montée sur une extrémité du tube isolant et adaptée pour connecter un équipement électrique ;
une deuxième bride montée sur l'autre extrémité du tube isolant et adaptée pour connecter l'autre équipement électrique ;
un premier capot d'étanchéité montée sur l'une extrémité du tube isolant et adapté pour étanchéifier un port à l'une extrémité du tube isolant ; et
un deuxième capot d'étanchéité monté sur l'autre extrémité du tube isolant et adapté pour étanchéifier l'autre port à l'autre extrémité du tube isolant,
dans lequel l'une extrémité du tube de réception de fibre passe à travers le et est fixée au premier capot d'étanchéité, et l'autre extrémité du tube de réception de fibre passe à travers le et est fixée au deuxième capot d'étanchéité, et
dans lequel le tube isolant est rempli d'un gaz isolant ou d'un liquide isolant en son sein.

7. Procédé de fabrication d'un isolateur, comprenant des étapes de :
fourniture d'un tube isolant ;
formation d'une jupe de parapluie isolant sur une paroi extérieure du tube isolant ;
fourniture d'au moins un tube de réception de fibre à l'intérieur du tube isolant, dans lequel l'au moins un tube de réception de fibre est maintenu sur une paroi intérieure du tube isolant ; et
soufflage d'au moins un câble/une fibre optique dans l'au moins un tube de réception de fibre par un équipement de soufflage pneumatique, respectivement.

8. Le procédé selon la revendication 7, dans lequel l'au moins un tube de réception de fibre est maintenu sur la paroi intérieure du tube isolant le long d'un trajet en spirale ou d'un trajet linéaire.
